# EUROPEAN PATENT APPLICATION

(11) **EP 4 406 983 A1**
(43) Date of publication of application: **31.07.2024**
(21) Application number: 23153083.3
(22) Date of filing: 24.01.2023
(51) Int. Cl.: C08F 210/16

(54) **PROCESS FOR PREPARING AN ALPHA-OLEFIN FEED STREAM AND POLYMERIZATION PROCESS USING THE SAME**

(71) Applicant: Borealis AG, 1020 Vienna (AT)
(72) Inventor: AL-HAJ ALI, Mohammad, 06850 Kulloo (FI); SLEIJSTER, Henry, 6161 Sittard-Geleen (NL); SATTAR, Mubashar, 06850 Kulloo (FI); ZITTING, Samuli, 06850 Kulloo (FI); RÄSÄNEN, Jukka, 06850 Kulloo (FI); VIJAY, Sameer, 4021 Linz (AT)
(74) Representative: Kador & Partner Part mbB

(57) **Abstract**

The present invention relates to a process for preparing an alpha-olefin feed stream comprising providing a low-pressure initial stream comprising a hydrocarbon solvent at a low pressure level in the range of from below atmospheric pressure to 15 barg; pressurizing the low-pressure initial stream to a medium pressure level in the range of from greater than 15 to 45 barg to form a medium-pressure initial stream; pressurizing the medium-pressure initial stream to a high pressure level in the range of from greater than 45 to 300 barg to form a high-pressure initial stream; wherein a monomer stream comprising an alpha-olefin monomer is introduced into the medium-pressure initial stream at medium pressure level and/or into the high-pressure initial stream at high pressure level, and one or more comonomer streams comprising at least one alpha-olefin comonomer is/are introduced into the low-pressure initial stream at low pressure level, and/or into the medium-pressure initial stream at medium pressure level, and/or into the high-pressure initial stream at high pressure level; to form an alpha olefin feed stream. Alternatively, the medium pressure level may be left out, wherein a monomer stream comprising an alpha-olefin monomer is introduced into the high-pressure initial stream at high pressure level; and one or more comonomer streams comprising at least one alpha-olefin comonomer is/are introduced into the low-pressure initial stream at low pressure level, and/or into the high-pressure initial stream at high pressure level; to form said alpha olefin feed stream. The above processes enable solution polymerisation with reduced process complexity and increased process economics.

## Description

The present invention is concerned with a process for preparing a feed stream, particularly an alpha-olefin feed stream for solution polymerization and a polymerization process using the same.

### Background of the invention

In solution polymerization processes it is necessary that all reactants are completely absorbed, i.e. solved, in the solvent upstream of the reactor. Therefore, reactant(s) and solvent(s) are typically brought together, mixed and solved before they are introduced into the polymerization reactor. Such process is generally understood as the preparation of the feed stream of a solution polymerization reactor.

The feed stream of a solution polymerization reactor can be prepared by mixing fresh solvent as well as fresh reactants. However, parts of the mixture leaving the reactor are commonly recycled and introduced into the preparation of the feed stream again. Such setup has the advantage of recycling not only material, but also energy, as the recycled streams still provide certain temperatures and pressures besides the unreacted reactants and solvent comprised therein.

Furthermore, recycle streams typically consist of condensed products (liquid) and uncondensed products (vapour). Volatile impurities and hydrogen are typically present in the vapour phase, but can also be present in the liquid phase. Removing volatile components from the liquid phase or a combined liquid/gaseous phase is usually done by simply venting the volatile components off, i.e. by letting the volatiles evapourate upon a sudden reduction of pressure. However, in case of solution polymerization also volatile reactants are present in the recycle streams such as ethylene or propylene. Hence, simply venting off above-mentioned volatile components would inevitably lead to a significant loss of reactants, which still could be used in the solution polymerization process.

Therefore, feed stream preparation devices and processes thereof for solution polymerization optimized in view of control of volatile components with improved volatile reactants recycling are generally needed.

Moreover, feed stream to be transferred to a reactor for solution polymerization need to supply sufficient monomer, comonomer and solvent to prepare desired polymers with sufficiently high comonomer contents. On the other hand, hydrogen is also contained in the feed stream and when it is recycled it could give rise to problems in chain length control. Therefore, sufficient purging out of the hydrogen has to be compromised with keeping sufficient monomer, comonomer and solvent in the process for economic reasons. Thus, the composition of the feed streams has to be carefully supplemented or adjusted, but also the reactor feed operation conditions have to be controlled carefully. As a recycle stream exiting and recycled from a solution polymerization reactor is obtained as a low-pressure liquid stream with moderate temperature, it has to be re-pressurized to be able to dissolve sufficient concentrations of monomers and comonomers. A comonomer reactant may be dosed at various pressure levels, depending on the nature and the absorption capacity of the monomer reactant. For economic reasons, it is desired to feed the comonomers at the lowest pressure level possible. However, not all comonomers can be added to a low pressure feed stream. For example, 1-butene cannot typically be dosed at low pressure at high concentrations because it will not dissolve in the stream completely or at all. If a comonomer like 1-butene evapourates from the monomer, like ethylene, it may also cause cavitation issues at the pump(s). Another issue is that a higher comonomer, like 1-octene is preferably dosed at the low-pressure side assisting in keeping the monomer, e.g. ethylene in the process instead of discharging it with the vent. Thus, various comonomers have to be dosed at various pressure levels, which makes the process more complex as regards economy and costs.

In solution polymerisation processes, usually a recycle stream to be recycled into the system is derived from a depressurised flashed stream after the reactor. The recycle stream is transferred to the reactor feed stream by adding fresh solvent, monomers and/or comonomers, compensating for loss of reactants or solvent. Next to restoring the composition of the feed stream also the reactor feed operation conditions have to be set. The recycle stream usually is a low-pressure liquid stream with moderate temperature and the reactor feed stream is a cold stream typically at a level of 50 to 120 Barg.

Document WO 2010/027491 A1 discloses a process for feeding ethylene into a polymerization system operating in a liquid phase or supercritical phase, including providing a low -pressure ethylene stream, one or more low-pressure C₃ to C₂₀ monomer streams, an optional low-pressure inert solvent/diluent stream, and one or more reactors, metering and mixing the streams together to form an ethylene-carrying low-pressure blended liquid feed stream, pressurizing the ethylene-carrying low-pressure blended liquid feed stream to the polymerization system pressure with one or more high-pressure pumps to form an ethylene-carrying high-pressure blended reactor feed stream, and feeding the ethylene- carrying high-pressure blended reactor feed stream to the one or more reactors. The monomer recycle stream may also be optionally blended with the ethylene feed stream and the C₃ to C₂₀ higher olefin before being pressurized to the reactor pressure.

The recycle feed stream must be re-pressurized to be used as a reactor feed. In a first step the depressurized recycle feed stream (typically at a low-pressure level in the range of below 15 barg) is pressurized to a medium-pressure level in the range of about 15 to 45 barg, and at this medium-pressure level the gaseous monomer reactant (typically ethylene or propylene) is also fed to the recycle stream. After cooling this stream because of absorption energy from dissolution of the monomer reactant, the reactor feed stream is pressurized from the medium-pressure level to a high-pressure level in the range of greater than 45 barg, typically at least about 90 barg.

Therefore, it is an object of the present invention to provide a process for preparing an alpha-olefin feed stream for solution polymerisation with reduced process complexity and increased process economics. Moreover, the versatility for using various and varying process reactants should be high.

### Summary of the Invention

Thus, it was surprisingly found that the above objects can be achieved by a process for preparing an alpha-olefin feed stream comprising
providing a low-pressure initial stream comprising a hydrocarbon solvent at a low pressure level in the range of from below atmospheric pressure to 15 barg;
pressurizing the low-pressure initial stream to a medium pressure level in the range of from greater than 15 to 45 barg to form a medium-pressure initial stream;
pressurizing the medium-pressure initial stream to a high pressure level in the range of from greater than 45 to 300 barg to form a high-pressure initial stream;
wherein the process further comprises
introducing a monomer stream comprising an alpha-olefin monomer into the medium-pressure initial stream at medium pressure level and/or into the high-pressure initial stream at high pressure level;
   and
introducing one or more comonomer streams comprising at least one alpha-olefin comonomer into the low-pressure initial stream at low pressure level, and/or into the medium-pressure initial stream at medium pressure level, and/or into the high-pressure initial stream at high pressure level;
to form an alpha olefin feed stream.

The above objects can alternatively be achieved by a process for preparing an alpha olefin feed stream, comprising
providing a low-pressure initial stream comprising a hydrocarbon solvent at a low pressure level in the range of from below atmospheric pressure to 15 barg;
pressurizing the low-pressure initial stream to a high pressure level in the range of from greater than 45 to 300 barg to form a high-pressure initial stream;
wherein the process further comprises
introducing a monomer stream comprising an alpha-olefin monomer into the high-pressure initial stream at high pressure level;
   and
introducing one or more comonomer streams comprising at least one alpha-olefin comonomer into the low-pressure initial stream at low pressure level, and/or into the high-pressure initial stream at high pressure level;
to form an alpha-olefin feed stream.

The objects are further achieved by a process for the polymerization of an alpha-olefin polymer operated in liquid or under supercritical conditions, comprising preparing an alpha-olefin feed stream as described above;
passing the alpha-olefin feed stream into one or more polymerization reactors arranged in parallel, in series, or a combination thereof; and
contacting the alpha-olefin feed stream with a catalyst in the one or more polymerization reactors to form a reaction mixture comprising an alpha-olefin polymer.

In this disclosure, the term *'low pressure level'* denotes a pressure level in the range of from below atmospheric pressure to 15 barg.

The term *'medium pressure level'* denotes a pressure level in the range of from greater than 15 to 45 barg.

The term *'high pressure level'* denotes a pressure level in the range of from greater than 45 to 300 barg.

The term *'volatile components'* as used herein denotes components preferably found in liquid and vapour recycle streams as provided by the recycling sections of solution polymerization processes. Such streams comprise components, which can evapourate from such liquid streams upon release of pressure or increase of temperature of said streams. Such volatile components can be inert gases such as nitrogen, unreacted light monomers such as ethylene and propylene, lower carbohydrates such as methane, ethane, propane or butane, generally volatile impurities provided by side reactions in the polymerization process as well as hydrogen.

The term *'fresh liquid'* as used herein denotes a liquid used in the feed stream having no amounts of volatile components at ambient conditions, i.e. 1 atm pressure and 20 °C.

The term *'recycle liquid'* as used herein denotes a liquid used in the feed stream having an amount of volatile components at ambient conditions, i.e. 1 atm pressure and 20 °C.

The term *'recycle vapour'* as used herein denotes a gaseous composition comprising an amount of volatile components.

The term *'reactants'* as used herein denotes monomers, such as ethylene or propylene, but further also includes optional comonomer(s).

### Short description of the Figures

Figure 1 shows a schematic drawing of a reactor lay-out according to the prior art. It should be understood that the schematic drawing does not reflect the actual dimensions of the feeding device. The same holds for the remaining figures.
Figure 2 shows a schematic drawing of a reactor lay-out according to a preferred embodiment of the present invention.
Figure 3 shows a schematic drawing of a reactor lay-out according to an alternative preferred embodiment of the present invention.

### Detailed Description of the Invention

The present invention provides, as a first alternative a process for preparing an alpha-olefin feed stream comprising
providing a low-pressure initial stream comprising a hydrocarbon solvent at a low pressure level in the range of from below atmospheric pressure to 15 barg;
pressurizing the low-pressure initial stream to a medium pressure level in the range of from greater than 15 to 45 barg to form a medium-pressure initial stream;
pressurizing the medium-pressure initial stream to a high pressure level in the range of from greater than 45 to 300 barg to form a high-pressure initial stream;
wherein the process further comprises
introducing a monomer stream comprising an alpha-olefin monomer into the medium-pressure initial stream at medium pressure level and/or into the high-pressure initial stream at high pressure level, preferably into the high-pressure initial stream at high pressure level;
   and
introducing one or more comonomer streams comprising at least one alpha-olefin comonomer into the low-pressure initial stream at low pressure level, and/or into the medium-pressure initial stream at medium pressure level, and/or into the high-pressure initial stream at high pressure level;
to form an alpha olefin feed stream.

As a second alternative, the process for preparing an alpha-olefin feed stream of the present invention comprises the steps of:
providing a low-pressure initial stream comprising a hydrocarbon solvent at a low pressure level in the range of from below atmospheric pressure to 15 barg;
pressurizing the low-pressure initial stream to a high pressure level in the range of from greater than 45 to 300 barg to form a high-pressure initial stream;
wherein the process further comprises
introducing a monomer stream comprising an alpha-olefin monomer into the high-pressure initial stream at high pressure level;
   and
introducing one or more comonomer streams comprising at least one alpha-olefin comonomer into the low-pressure initial stream at low pressure level, and/or into the high-pressure initial stream at high pressure level;
to form an alpha-olefin feed stream.

The present invention generally provides a process for preparing an alpha-olefin feed stream for a solution polymerization, the alpha-olefin feed stream comprising at least one solvent, at least one alpha-olefin monomer reactant, one or more comonomer reactants and optionally hydrogen, inert gases and/or impurities.

Generally, the process of the present invention is connected to a solution polymerization process. The process of the present invention provides an alpha-olefin feed stream for a solution polymerization process. Preferably, the process of the present invention is used to recycle streams (liquid and also vapour streams) withdrawn from a solution polymerization process. Even more preferably, these two solution polymerization processes (i.e. the one the feed stream is fed to and the one the recycle streams are taken from) are one identical solution polymerization process.

Preferably, the present invention is applicable for supercritical, solution and advanced solution polymerization processes, more preferably continuous supercritical, solution and advanced solution polymerization processes. Most preferably, the production process comprises a continuous solution polymerization process.

The processes of the present invention facilitate the processing of depressurized recycle streams, reduce processing/pressurizing steps, while still increasing contents of valuable monomers to be used in the final alpha-olefin feed stream for polymerizing alpha-olefin polymers.

According to the invention, the alpha-olefin monomer introduced with said monomer stream is preferably selected from ethylene and propylene.

According to the invention, the at least one alpha-olefin comonomer introduced with said one or more comonomer streams into the low-pressure initial stream at low pressure level is preferably selected from the group consisting of 1-heptene, 1-octene, 1-nonene and 1-decene or mixtures thereof.

The at least one alpha-olefin comonomer introduced with said one or more comonomer stream(s) into the medium-pressure initial stream at medium pressure level, and/or into the high-pressure initial stream at high pressure level is preferably selected from the group consisting of propene, 1 -butene, 1 -pentene and 1-hexene or mixtures thereof.

The processes of the invention may involve the introduction of a single or more than one comonomer stream into the process. Thus, a first and optionally a second alpha-olefin comonomer, which differ from each other, may be introduced with comonomer streams. Examples of introducing a first and a second alpha-olefin comonomer as comonomer streams at different pressure levels are detailed in the example section.

The processes according to the present invention may preferably further comprise the introduction of a chain transfer agent stream comprising at least one chain transfer agent, preferably hydrogen, into the medium pressure stream and/or into the high-pressure initial stream at high pressure level.

The process according to the present invention may preferably further comprise the introduction of a hydrocarbon solvent stream comprising additional hydrocarbon solvent into the low-pressure initial stream at low pressure level.

The low pressure level is preferably a pressure in the range of from 2 to 10 barg, the medium pressure level is preferably a pressure in the range of from 20 to 40 barg, and the high pressure level is preferably a pressure in the range of from 50 to 250 barg.

The medium-pressure initial stream is preferably cooled after the pressurization and/or after the introduction of the monomer stream and the one or more comonomer streams. Alternatively or in addition, the high-pressure initial stream may be cooled after the pressurization and/or after the introduction of the monomer stream and the one or more comonomer streams.

According to the present invention, the temperature of the low-pressure initial stream may preferably be in the range of from 10 to 50 °C, more preferably of from 20 to 40°C. The temperature of the medium-pressure initial stream may preferably be in the range of from 20 to 50°C, more preferably of from 25 to 45°C. The temperature of the high-pressure initial stream may preferably be in the range of from -40 to 50 °C, more preferably from -30 to 40°C.

According to the present invention, the concentration of the alpha-olefin monomer in the medium-pressure initial stream may preferably be in the range of from 0 to 22 wt.-%, more preferably in the range of from 0 to 21 wt.-%, even more preferably in the range of from 0.01 to 20 wt.-%.

The concentration of the at least one alpha-olefin comonomer in the medium-pressure initial stream may preferably be in the range of from 0 to 35 wt.-%, more preferably in the range of from 0.01 -20 wt.-%, even more preferably in the range of from 0.01-15 wt.-% or alternatively preferably in the range of from 0.01 to 50 wt.-%, more preferably in the range of from 0.01 to 40 wt.-%, even more preferably in the range of from 0.01 to 35 wt.-%. According to preferred embodiments of the above-described invention, the concentration of 1-butene as the at least one alpha-olefin comonomer in the medium-pressure initial stream may preferably be in the range of from 0 to 15 wt.-%, or the concentration of 1-octene as the at least one alpha-olefin comonomer in the medium-pressure initial stream may preferably be in the range of from 0.01 to 35 wt.-%.

The concentration of the alpha-olefin monomer in the high-pressure initial stream may preferably be in the range of from 10 to 20 wt.-%, more preferably in the range of from 12-20 wt.-%.

The concentration of the at least one alpha-olefin comonomer in the high-pressure initial stream may preferably be in the range of from 0 to 35 wt.-%, more preferably in the range of from 0.01 -20 wt.-%, even more preferably in the range of from 0.01-15 wt.-% or alternatively in the range of from 0 to 50 wt.-%, more preferably in the range of from 0 to 40 wt.-%, even more preferably in the range of from 0 to 35 wt.-%. According to preferred embodiments of the above-described invention, the concentration of 1-butene as the at least one alpha-olefin comonomer in the high-pressure initial stream may preferably be in the range of from 0 to 15 wt.-%, or the concentration of 1-octene as the at least one alpha-olefin comonomer in the high-pressure initial stream may preferably be in the range of from 0 to 35 wt.-%.

The above defined streams may be liquid or in the supercritical phase.

According to the present invention, the low-pressure initial stream may preferably be a recycle stream.

In a solution polymerization process a solvent is also present. The solvent is in liquid or supercritical state in the polymerization conditions. The solvent is typically and preferably a hydrocarbon solvent. The liquid hydrocarbon solvent used is preferably a C₅₋₁₂-hydrocarbon, which may be unsubstituted or substituted by C₁₋₄ alkyl group such as pentane, methyl pentane, hexane, heptane, octane, cyclohexane, methyl cyclohexane and hydrogenated naphtha, or combinations thereof. More preferably, unsubstituted C₆-₁₀-hydrocarbon solvents are used, most preferably unsubstituted C₅-₇-hydrocarbon solvents, or combinations thereof.

Other components may also be added into the reactor. It is known to feed hydrogen into the reactor for controlling the molecular weight of the polymer formed during the polymerization. The use of different antifouling compounds is also known in the art. In addition, different kinds of activity boosters or activity retarders may be used for controlling the activity of the catalyst.

Typically, the content of the polymer in the stream withdrawn from the polymerization reactor comprising the solvent, the polymer and the unreacted monomer and optionally comonomer is from 10 to 35 wt. %, preferably from 12.5 to 30 wt.-%, more preferably from 15 to 25 wt.-% of polymer.

Also typically, the stream withdrawn from the reactor_is further processed and solvent, monomers and comonomers are recycled, i.e. fed to a separation section downstream, to an amount of more than 50% of the total stream withdrawn from the polymer stream, preferably more than 60% and most preferably more than 70%. In such a separation section the polymer feed stream is usually split into a polymer-rich condensed phase and a polymer-lean vapour phase. The polymer-lean vapour phase from the first separation fed by the reactor outlet comprising solvent, unreacted monomers and comonomers, inert gases, hydrogen and volatile impurities is subsequently separated into a recycle liquid stream and a recycle vapour stream by cooling. This recycle liquid stream, and also optionally the recycle vapour stream, is fed to the recycle feed vessel according to the present invention, as described herein (as in the examples).

The solution polymerisation process can be conducted in a solution polymerisation plant as described e.g. in WO 2011/087728 A1 or in EP 20 208 837.3.

In a preferred embodiment of the invention, the at least one alpha-olefin comonomer is selected from the group consisting of 1-heptene, 1-octene, 1-nonene and 1-decene or mixtures thereof, when one or more comonomer streams are introduced into the low-pressure initial stream at low pressure level; and wherein the at least one alpha-olefin comonomer is selected from the group consisting of propene, 1-butene, 1-pentene and 1-hexene or mixtures thereof, when one or more comonomer streams are introduced into the medium-pressure initial stream at medium pressure level, and/or into the high-pressure initial stream at high pressure level.

This has the advantage that the at least one alpha-olefin comonomer introduced into the low-pressure initial stream at low pressure level can maximally absorb the alpha-olefin monomer, preferably ethylene or propylene, provided in the low-pressure initial stream.

In this embodiment, the at least one alpha-olefin comonomer introduced into the medium-pressure initial stream at medium pressure level, and/or into the high-pressure initial stream at high pressure level can be absorbed in high amounts in the respective medium-pressure or high-pressure initial streams.

In an embodiment of the invention, hydrogen is introduced into the medium-pressure initial stream at medium pressure level. An advantage of this embodiment is that by introducing hydrogen at medium pressure level, separate compressing the hydrogen to a higher pressure is avoided. Then, hydrogen will be taken by the reactor feed at medium pressure and compressed to the reactor pressure together with the reactor feed.

The low pressure level is more preferably a pressure in the range of from 2 to 10 barg, and even more preferably from 2 to 7 barg, still more preferably from 2.5 or 3 to 6 barg.

The medium pressure level is more preferably a pressure in the range of from 20 to 40 barg, and even more preferably from 25 to 35 barg.

The high pressure level is more preferably a pressure in the range of from 50 to 250 barg, even more preferably from 60 to 200 barg, and still more preferably from 70 to 200 barg.

It is understood that each of the above ranges may be combined with each other and each of the low, medium and high pressure ranges can be combined among each other.

The concentration of the alpha-olefin monomer in the medium-pressure initial stream is preferably 15 to 23 wt.-%. The concentration of the at least one alpha-olefin comonomer in the medium-pressure initial stream is preferably 0.01 to 35 wt.-%. The concentration of the alpha-olefin monomer in the high-pressure initial stream is preferably 15 to 20 wt.-%, more preferably 16 to 19 wt.-%. The concentration of the at least one alpha-olefin comonomer in the high-pressure initial stream is preferably 0.01 to 50 wt.%, more preferably 5 to 45 wt.-%, even more preferably 10 to 40 wt.%, all concentrations being based on the total weight of the respective stream.

It is understood that each of the above concentration ranges may be combined with each other.

It is an effect according to the present invention that more comonomer (such as e.g. propene, 1-butene, 1-pentene and 1-hexene or mixtures thereof) is absorbed when being introduced at elevated pressures. Due to the higher concentration of said at least one comonomer in the reactor feed stream, a higher comonomer content in the resulting copolymer can be obtained, which translates to lower densities thereof such that alpha-olefin elastomers with high versatility of product properties become available. Likewise, more monomer (e.g. ethylene or propylene) is absorbed when being introduced at elevated pressures such that less gaseous monomer needs to be purged, which is beneficial in terms of process economics.

The introduction of a higher carbon number comonomer (such as e.g. 1-heptene, 1-octene, 1-nonene and 1-decene or mixtures thereof) at elevated pressure is detrimental for the process economics due to the effect of higher monomer losses or the need for higher pressures for optimal monomer absorption in the feed stream. Therefore, these higher carbon number comonomers are generally introduced at a low pressure level.

In the feeding process of the present invention a hydrocarbon solvent stream comprising additional hydrocarbon solvent may preferably be introduced into the low-pressure initial stream at low pressure level.

In case of using a chain transfer agent, it may preferably be introduced with a chain transfer agent stream comprising at least one chain transfer agent, preferably hydrogen, into the high-pressure initial stream at high pressure level.

In the feeding process of the present invention, it is preferred that the medium-pressure initial stream and/or the high-pressure initial stream is cooled after the pressurization and/or after the introduction of the monomer stream and the one or more comonomer streams. This can be done by providing one or more heat exchangers downstream to a feed vessel containing the medium-pressure or high-pressure initial stream and/or downstream to a pressurising pump used for pressurizing the initial streams to medium or high pressure level, respectively.

The temperature of the low-pressure initial stream is preferably in the range of from 10 to 50 °C, more preferably of from 20 to 40°C. The temperature of the medium-pressure initial stream is preferably in the range of from 20 to 50°C, more preferably of from 25 to 45°C. The temperature of the high-pressure initial stream is in the range of from -40 to 50 °C, preferably from -30 to 40°C.

At least one or more or all of the above discussed streams may be liquid or in the supercritical phase.

The low-pressure initial stream may be a recycle stream, recycled from a product stream of a solution polymerisation process as discussed above.

The final alpha-olefin feed stream formed in the feeding processes of the present invention may be used for the polymerization of an alpha-olefin polymer operated in liquid or under supercritical conditions. Thus, the present invention is further directed to a process for the polymerization of an alpha-olefin polymer operated in liquid or under supercritical conditions, comprising
preparing an alpha-olefin feed stream as described above;
passing the alpha-olefin feed stream into one or more polymerization reactors arranged in parallel, in series, or a combination thereof; and
contacting the alpha-olefin feed stream with a catalyst in the one or more polymerization reactors to form a reaction mixture comprising an alpha-olefin polymer.

The alpha-olefin polymer produced in the present invention can be any polymer. Preferably, the polymer produced in the present invention is an alpha-olefin homo- or copolymer. More preferably, the monomer of this polymer is selected from an alpha-olefin having a carbon atom number of 2 to 4, preferably from ethylene, propylene and 1-butene, more preferably from ethylene and propylene, most preferably from ethylene. Particularly preferably, the polymer is an ethylene copolymer or homopolymer.

In case the polymer is a copolymer, the comonomer preferably is different from the alpha-olefin monomer and is selected from the group consisting of linear and cyclic alpha-olefins having from 2 to 12 carbon atoms and mixtures thereof. More preferably, the comonomer is an alpha-olefin different from the olefin monomer and is selected from the group consisting of linear alpha-olefins having from 2 to 12 carbon atoms and mixtures thereof, preferably 4 to 10 carbon atoms, most preferably 1-butene and 1-octene.

The polymer may also be an elastomeric alpha-olefin copolymer, e.g. an ethylene or propylene copolymer.

In a most preferred embodiment, the polymer is produced in a solution polymerization process as disclosed in the following.

The polymerization is typically conducted in the presence of an olefin polymerization catalyst. The olefin polymerization catalyst may be any catalyst known in the art, which is capable of polymerizing the monomer and the optional comonomer. Thus, the polymerization catalyst may be a Ziegler-Natta catalyst as disclosed in EP-A-280352, EP-A-280353 and EP-A-286148, or it may be a metallocene catalyst as disclosed in WO-A-1993025590, US-A-5001205, WO-A-1987003604 and US-A-5001244, or it may be a combination of these. Other suitable catalysts, such as late transition metal catalysts, can also be used.

Examples of suitable processes for the polymerization of an alpha-olefin polymer can be found e.g. in WO 2017/108951 A1 and WO 2017/108969 A1.

The above reaction mixture comprising an alpha-olefin polymer may optionally be further polymerized in one or more further polymerization reactors involving the feed of one or more comonomers to achieve a product stream comprising an alpha-olefin polymer composition as a desired product. Preferably, the alpha-olefin polymer composition is an elastomeric alpha-olefin polymer composition, preferably an elastomeric ethylene or propylene copolymer. Examples of desired products are for example elastomers or plastomers in which ethylene is copolymerized with one or more C₃ to C₁₀ comonomers, or propylene is copolymerized with one or more C₄ to C₁₀ comonomers, wherein 1-butene and/or 1-octene are preferred comonomers.

### Examples

### Comparative Example 1: Production of a butene plastomer

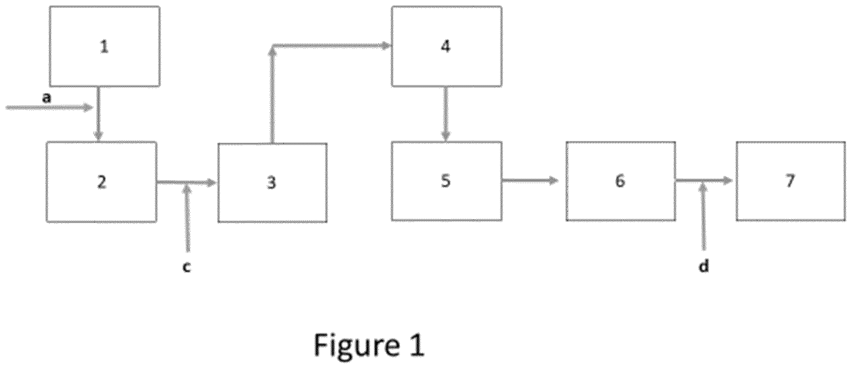

A reactor lay-out according to Fig. 1 is established. The comonomer of 1-butene is added to the outlet of a recycle feed vessel (1) as a low-pressure first comonomer to prepare a concentration of 5 wt.-% of 1-butene as a low-pressure comonomer in a solvent at a temperature of ~40 °C and a pressure of around 6 barg to obtain a low-pressure initial stream (a).

The pressure is increased to 35 barg level by a recycle feed pump (2) downstream of the recycle feed vessel (1).

At this medium pressure level, ethylene is fed as a monomer (c) to reach a concentration of 20 wt.-% upon cooling the medium-pressure initial stream thus obtained.

After passing the medium-pressure initial stream to a 1^{st} heat exchanger(3) and a reactor feed vessel (4) downstream of the 1^{st} heat exchanger (3), the pressure is increased to 92 barg by a reactor feed pump (5). The high-pressure initial stream thus obtained is led to a 2^{nd} heat exchanger (6).

At this high pressure level, high-pressure hydrogen (d) is fed downstream of the 2^{nd} heat exchanger (6) to reach the final composition of the reactor feed stream, which is to be fed to the reactor (7).

### Inventive Example 1: Production of a butene plastomer with comonomer dosing at medium pressure

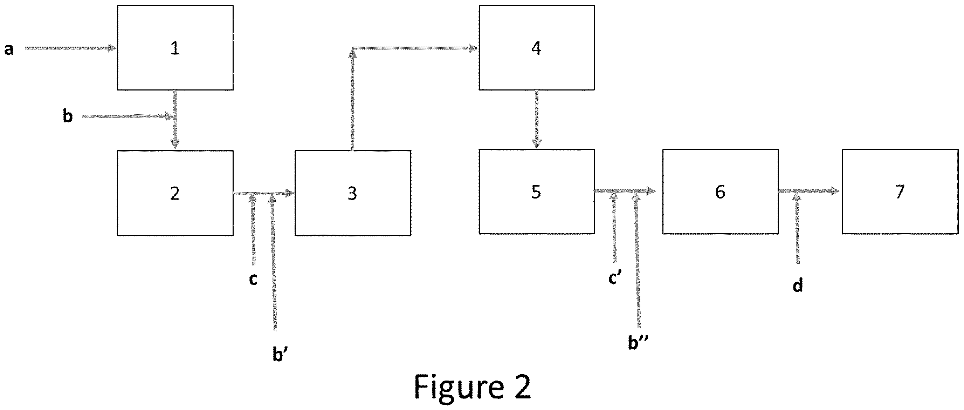

A reactor lay-out according to Fig. 2 is established. The solvent hexane is fed (a) to the recycle feed vessel (1) at a temperature of ~40 °C and a pressure of around 5 barg to obtain a low-pressure initial stream. The pressure is increased to 35 barg level by a recycle feed pump (2) downstream of the recycle feed vessel (1).

At this medium pressure level, ethylene is fed as a monomer (c) to reach a final reactor feed concentration of 20 wt.-% upon cooling the medium-pressure initial stream thus obtained. The comonomer 1-butene is also added (b') to the medium-pressure reactor feed vessel (1) to prepare a final reactor feed concentration of 4 wt.-% of 1-butene.

After passing the medium-pressure initial stream to a 1^{st} heat exchanger(3) and a reactor feed vessel (4) downstream of the 1^{st} heat exchanger (3), the pressure is increased to 94 barg by the reactor feed pump (5) to obtain a high-pressure initial stream.

At this high pressure level, high-pressure hydrogen (d) is fed downstream of the 2^{nd} heat exchanger (6) to reach the final composition of the reactor feed stream, which is to be fed to the reactor (7).

### Inventive Example 2: Production of a butene plastomer with comonomer dosing at high pressure

A reactor lay-out according to Fig. 2 is established. The solvent hexane is fed (a) to the recycle feed vessel (1) at a temperature of ~40 °C and a pressure of around 5 barg to obtain a low-pressure initial stream. The pressure is increased to 35 barg level by a recycle feed pump (2) downstream of the recycle feed vessel (1).

At this medium pressure level, ethylene is fed as a monomer (c) to reach a final reactor feed concentration of 20 wt.-% upon cooling the medium-pressure initial stream thus obtained which is fed to the medium-pressure reactor feed vessel (1).

After passing the medium-pressure initial stream to a 1^{st} heat exchanger(3) and a reactor feed vessel (4) downstream of the 1^{st} heat exchanger (3), the pressure is increased to 94 barg by the reactor feed pump (5) to obtain a high-pressure initial stream. At this high pressure, stream the comonomer 1-butene is added (b") to prepare a final reactor feed concentration of 4 wt.-% of 1-butene upstream of the 2^{nd} heat exchanger (6).

At this high pressure level, high-pressure hydrogen (d) is fed downstream of the 2^{nd} heat exchanger (6) to reach the final composition of the reactor feed stream, which is to be fed to the reactor (7).

### Inventive Example 3: Production of a butene plastomer with comonomer dosing and monomer dosing at high pressure

A reactor lay-out according to Fig. 2 is established. The solvent hexane is fed (a) to the recycle feed vessel (1) at a temperature of ~40 °C and a pressure of around 5 barg to obtain a low-pressure initial stream. The pressure is increased to 35 barg level by a recycle feed pump (2) downstream of the recycle feed vessel (1).

This stream is fed to the reactor feed vessel (4) where after the pressure is increased to 94 barg by the reactor feed pump (5) to obtain a high-pressure initial stream. At this high pressure, stream the comonomer 1-butene is added (b"), to prepare a final reactor feed concentration of 4 wt.-% of 1-butene, and ethylene is fed, as a monomer (c') to reach a final reactor feed concentration of 20 wt.-%, upstream of the 2^{nd} heat exchanger (6).

At this high pressure level, high-pressure hydrogen (d) is fed downstream of the 2^{nd} heat exchanger (6) to reach the final composition of the reactor feed stream, which is to be fed to the reactor (7).

### Inventive Example 4: Production of a butene plastomer with comonomer dosing and monomer dosing at high pressure in a one pump configuration

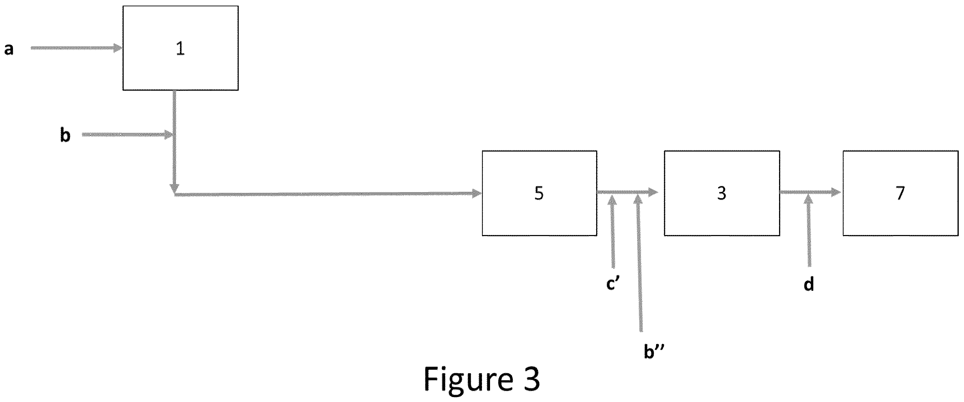

A reactor lay-out according to Fig. 3 is established. The solvent hexane is fed (a) to the recycle feed vessel (1) at a temperature of ~40 °C and a pressure of around 5 barg to obtain a low-pressure initial stream. The pressure is increased to 94 barg level by a reactor feed pump (5) downstream of the recycle feed vessel (1).

At this high pressure, stream the comonomer 1-butene is added (b"), to prepare a final reactor feed concentration of 4 wt.% of 1-butene, and ethylene is fed, as a monomer (c') to reach a final reactor feed concentration of 20 wt.-%, upstream of the 2^{nd} heat exchanger (6).

At this high pressure level, high-pressure hydrogen (d) is fed downstream of the 2^{nd} heat exchanger (6) to reach the final composition of the reactor feed stream, which will be fed to the reactor (7).

**Reference numbers**

| | |
|---|---|
| 1: recycle feed vessel | a: low-pressure initial stream with feeds of: |
| 2: recycle feed pump | solvent + first comonomer |
| 3: 1^{st} heat exchanger | b: second comonomer added to the low-pressure initial stream |
| | b': second comonomer added to the medium-pressure initial stream |
| | b": second comonomer added to the high-pressure initial stream |
| 4: reactor feed vessel | c: monomer added to the medium-pressure initial stream |
| | c': monomer added to the high-pressure initial stream |
| 5: reactor feed pump | d: hydrogen added to the high-pressure initial stream |
| 6: 2^{nd} heat exchanger | |
| 7: polymerization reactor | |

## Claims

1. Process for preparing an alpha-olefin feed stream comprising
providing a low-pressure initial stream comprising a hydrocarbon solvent at a low pressure level in the range of from below atmospheric pressure to 15 barg;
pressurizing the low-pressure initial stream to a medium pressure level in the range of from greater than 15 to 45 barg to form a medium-pressure initial stream;
pressurizing the medium-pressure initial stream to a high pressure level in the range of from greater than 45 to 300 barg to form a high-pressure initial stream;
wherein the process further comprises
introducing a monomer stream comprising an alpha-olefin monomer into the medium-pressure initial stream at medium pressure level and/or into the high-pressure initial stream at high pressure level;
and
introducing one or more comonomer streams comprising at least one alpha-olefin comonomer into the low-pressure initial stream at low pressure level, and/or into the medium-pressure initial stream at medium pressure level, and/or into the high-pressure initial stream at high pressure level;
to form an alpha olefin feed stream.

2. Process for preparing an alpha olefin feed stream, comprising
providing a low-pressure initial stream comprising a hydrocarbon solvent at a low pressure level in the range of from below atmospheric pressure to 15 barg;
pressurizing the low-pressure initial stream to a high pressure level in the range of from greater than 45 to 300 barg to form a high-pressure initial stream;
wherein the process further comprises
introducing a monomer stream comprising an alpha-olefin monomer into the high-pressure initial stream at high pressure level;
and
introducing one or more comonomer streams comprising at least one alpha-olefin comonomer into the low-pressure initial stream at low pressure level, and/or into the high-pressure initial stream at high pressure level;
to form an alpha-olefin feed stream.

3. The process according to claims 1 or 2, wherein the alpha-olefin monomer is selected from ethylene and propylene.

4. The process according to any one of the preceding claims, wherein the at least one alpha-olefin comonomer is selected from the group consisting of 1-heptene, 1-octene, 1-nonene and 1-decene or mixtures thereof, when one or more comonomer streams are introduced into the low-pressure initial stream at low pressure level; and
wherein the at least one alpha-olefin comonomer is selected from the group consisting of propene, 1-butene, 1-pentene and 1-hexene or mixtures thereof, when one or more comonomer streams are introduced into the medium-pressure initial stream at medium pressure level, and/or into the high-pressure initial stream at high pressure level.

5. The process according to any one of the preceding claims, wherein the at least one alpha-olefin comonomer introduced into the low-pressure initial stream at low pressure level and the at least one alpha-olefin comonomer introduced into the medium-pressure initial stream at medium pressure level, and/or into the high-pressure initial stream at high pressure level, differ from each other.

6. The process according to any one of the preceding claims, which further comprises introducing a chain transfer agent stream comprising at least one chain transfer agent, preferably hydrogen, into the medium-pressure stream and/or into the high-pressure initial stream at high pressure level.

7. The process according to any one of the preceding claims, which further comprises introducing a hydrocarbon solvent stream comprising additional hydrocarbon solvent into the low-pressure initial stream at low pressure level.

8. The process according to any one of the preceding claims, wherein the low pressure level is a pressure in the range of from 2 to 10 barg, and/or
wherein the medium pressure level is a pressure in the range of from 20 to 40 barg, and/or,
wherein the high pressure level is a pressure in the range of from 50 to 250 barg.

9. The process according to any one of claims 1 and 3 to 8, wherein the medium-pressure initial stream is cooled after the pressurization and/or after the introduction of the monomer stream and the one or more comonomer streams and/or wherein the high-pressure initial stream is cooled after the pressurization and/or after the introduction of the monomer stream and the one or more comonomer streams.

10. The process according to any one of the preceding claims, wherein the temperature of the low-pressure initial stream is in the range of from 10 to 50 °C, preferably of from 20 to 40°C; wherein the temperature of the medium-pressure initial stream is in the range of from 20 to 50°C, preferably of from 25 to 45°C; and/or wherein the temperature of the high-pressure initial stream is in the range of from -40 to 50 °C, preferably from -30 to 40°C.

11. The process according to any one of the preceding claims, wherein the concentration of the alpha-olefin monomer in the medium-pressure initial stream is in the range of from 0 to 22 wt.-%, and/or
the concentration of the at least one alpha-olefin comonomer in the medium-pressure initial stream is in the range of from 0 to 35 wt.-%,; or alternatively in the range of from 0.01 to 50 wt.-% and/or
wherein the concentration of the alpha-olefin monomer in the high-pressure initial stream is in the range of from 10 to 20 wt.-%, and/or
the concentration of the at least one alpha-olefin comonomer in the high-pressure initial stream is in the range of from 0 to 35 wt.-%, or alternatively in the range of from 0 to 50 wt.-%.

12. The process according to any one of the preceding claims, wherein the streams are liquid or in the supercritical phase.

13. The process according to any one of the preceding claims, wherein the low-pressure initial stream is a recycle stream.

14. Process for the polymerization of an alpha-olefin polymer operated in liquid or under supercritical conditions, comprising
preparing an alpha-olefin feed stream according to any one of the preceding claims;
passing the alpha-olefin feed stream into one or more polymerization reactors arranged in parallel, in series, or a combination thereof; and
contacting the alpha-olefin feed stream with a catalyst in the one or more polymerization reactors to form a reaction mixture comprising an alpha-olefin polymer.
